# EUROPEAN PATENT SPECIFICATION

(11) **EP 1 344 296 B1**
(45) Date of publication and mention of the grant of the patent: **02.07.2008**
(21) Application number: 01272260.9
(22) Date of filing: 19.12.2001
(51) Int. Cl.: H02K 3/28, H02K 15/095

(54) **COIL WINDING ARRANGEMENT FOR ARMATURES**
SPULENWICKLUNGSANORDNUNG FÜR ARMATUREN
BOBINAGES POUR INDUITS

(30) Priority: 22.12.2000 JP 2000390164
(43) Date of publication of application: 17.09.2003
(73) Proprietor: Mitsuba Corporation, Kiryu-shi, Gunma 376-8555 (JP)
(72) Inventor: WATANABE, Toshiyuki, Kiryu-shi, Gunma 376-0041 (JP)
(74) Representative: Schmitz, Jean-Marie
(86) International application number: PCT/JP2001/011157
(87) International publication number: WO 2002/052693

(56) References cited:
- WO-A-00/48292
- WO-A-00/76054
- PATENT ABSTRACTS OF JAPAN vol. 1999, no. 03, 31 March 1999 (1999-03-31) -& JP 10 336934 A (SANYO DENKI CO LTD), 18 December 1998 (1998-12-18)
- PATENT ABSTRACTS OF JAPAN vol. 015, no. 428 (E-1128), 30 October 1991 (1991-10-30) -& JP 03 178536 A (MEIDENSHA CORP), 2 August 1991 (1991-08-02)

## Description

### TECHNICAL FIELD

The present invention relates to a coil winding arrangement for the armatures of multi-phase motors and generators.

### BACKGROUND OF THE INVENTION

Conventionally, in an engine starter for motor vehicles (which may consist of an ACG starter) using an electric motor, it was considered necessary to use coil wire having a relatively large diameter to produce a large torque that is required for starting the engine. However, the use of coil wire having a large diameter necessitates the slots (spacing between core teeth) to be widened and causes the volume of the coil to be increased so that the motor increases in size and the production efficiency is impaired due to the difficulty in the handling of thick coil wire. Additionally, the use of thick wire having a higher rigidity produces a handling problem for a coil winding machine, typically consisting of a flyer winding machine.

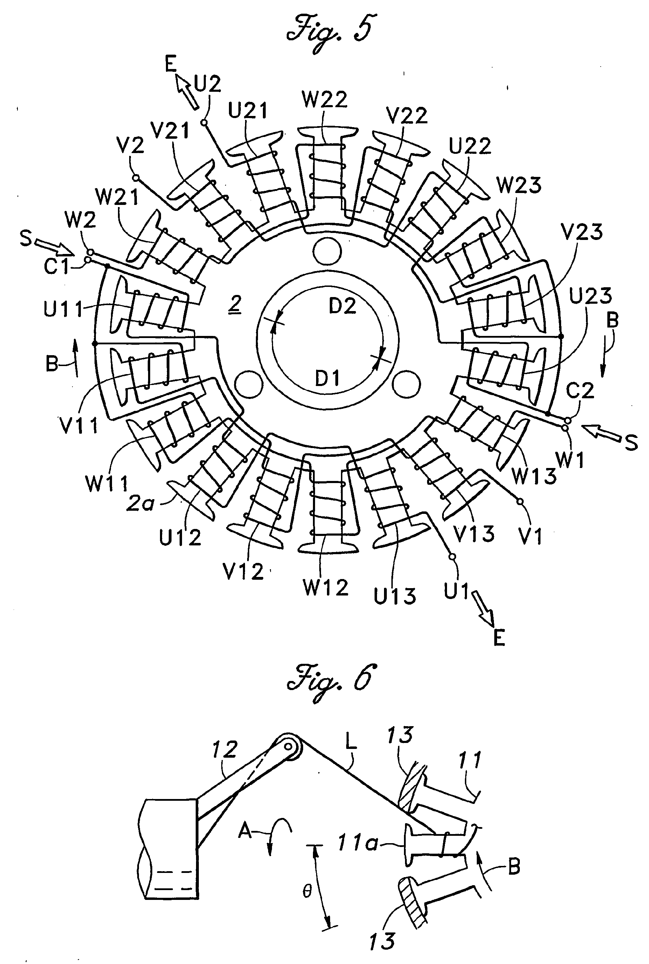

To eliminate such a problem, it is conceivable to use finer coil wire and to provide two sets of coils that are connected in parallel to each other for each phase. The winding machine for winding such coils may consist of a flyer type coil winding machine as shown in Figure 6. Figure 6 shows how coil wire L is wound around a tooth 11a. According to this flyer type coil winding machine which uses a flyer 12 and a wire guide 13, the coil wire L which is paid out from the flyer 12 rotating in the direction indicated by arrow A is guided onto the object tooth 11a to be wound thereon. When the coil has been fully wound around the tooth 11a, the core (stator) 11 is indexed by the angle of 3θ (where θ is the pitch angle of the core teeth) in the case of a three-phase motor so as to wind the next coil around the third next tooth.

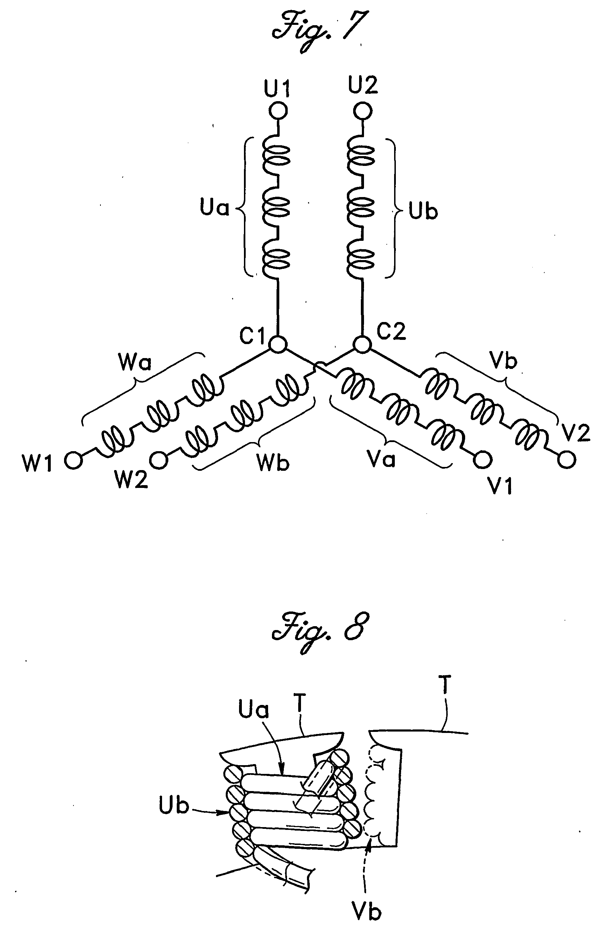

Two sets of coils can be wound around the core teeth without changing the number of core teeth in two different ways. The two sets of coils can be wound one over the other as illustrated in Figure 8. For the U phase, for instance, the coil of the first set Ua is first wound, and the coil of the second set Ub is wound around the coil of the first set Ua. They are connected in parallel to each other as illustrated in Figure 7. This can be accomplished by using a regular flyer type winding machine by indexing the armature by two revolutions, instead of one revolution, for completing the coil winding process of the U phase. In this case, the outer diameter of the coil increases, and may interfere with the adjacent coil Vb, for instance, particularly in a bottom part of the slot where the slot width is reduced. This can be avoided by widening the slot, but it will result in an unacceptable increase in the size of the motor.

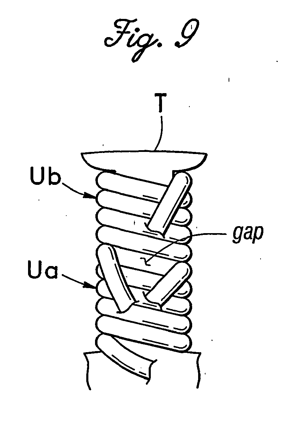

It is also possible to wind the first and second coils one next to each other along the radial length of the corresponding tooth as shown in Figure 9, and eliminate the need to widen the spacing between the adjacent teeth. This also can be accomplished by using a regular flyer type winding machine by indexing the armature by two revolutions, instead of one revolution, for completing the coil winding process of each phase. In this case, each core tooth is required to be unacceptably long to be able to accommodate the two coils on each core tooth. Also, a gap is produced between the two coils, and this also increases the radial length of each core tooth.

Either when the two coils are wound one over the other or one next to the other, the increase in the size of the motor is inevitable. Furthermore, there are two pairs of coil leads for each tooth, and they tend to interfere with the process of winding coils. The leads are required to be properly placed during the coil winding process. Also, the properly connecting the leads of the coils in a reliable manner may not be easy. In either case, the stator is required to be indexed by two revolutions, and this also impairs the production efficiency.

An example of prior art coil winding arrangement for armatures is disclosed in WO-A-00 76054.

In Patent Abstracts of Japan vol. 015, no. 428 (E-1128), 30 October 1991 (1991-10-30)-& JP 03 178536 A (Meidensha Corp), 2 August 1991 (1991-08-02), there is described a coil winding arrangement for armatures according to the preamble of claim 1. The coil winding arrangement is formed by winding coil wire around a plurality of core teeth provided in a core of an armature for a multi-phase electric motor or generator and comprises at least two sets of coils that are wound around different core teeth for each phase, said at least two sets of coils being connected in parallel to each other, wherein each set of coils for each phase includes a plurality of coils wound around different core teeth and, the core teeth corresponding to different sets of coils are grouped in circumferentially separated regions of the armature.

### BRIEF SUMMARY OF THE INVENTION

In view of such problems of the prior art, a primary object of the present invention is to provide a coil winding arrangement for an armature of a motor or generator which allows the use of a relatively thin coil wire while ensuring a large torque or electric output.

A second object of the present invention is to provide a coil winding arrangement which provides at least two sets of coils that are connected in parallel to each other without substantially complicating the coil winding arrangement.

A third object of the present invention is to provide a coil winding arrangement which provides at least two sets of coils that are connected in parallel to each other without substantially impairing the production efficiency.

These and other objects of the present invention can be accomplished by providing a coil winding arrangement for armatures according to claim 1.

Thus, each core tooth is required to have only one coil wound around it (although the number of core teeth may have to be increased) so that the excessive fattening of the coils (giving rise to the need to widen the core slots) or the need for increasing the radial length of each core tooth can be avoided. Typically, the armature is provided with a three-phase star-connected coils.

In particular, the core teeth corresponding to different sets of coils are preferably grouped in circumferentially separated regions of the armature so that the indexing of the core during the coil winding process may be simplified. Preferably, the coil sets for each phase may be wound while indexing the core in a fixed rotational direction. It is also possible to arrange two or more sets of coils in an overlapping fashion. However, in such a case, it is necessary to index the core by one full revolution for winding the coils of a single coil set for each phase, and the production efficiency is impaired.

According to a preferred embodiment of the present invention, the number of the coil sets is two, and the core teeth corresponding to different sets of coils are grouped in two semi-circumferential regions of the armature, the coil belonging to one of the coil sets being wound in a certain direction while the coil belonging to the other coil set is wound in an opposite direction. Thereby, the coil ends of the two coil sets that are required to be commonly connected may be arranged physically close to each other for each phase.

It is particularly preferable if the coil sets for each phase are wound while indexing the core in a fixed rotational direction. Therefore, the coil sets may be both wound by a same flyer or may be simultaneously wound by two different flyers. In either case, the production efficiency can be improved without increasing the cost.

Alternatively, the coils belonging to different sets of coils may be all wound in a same direction. In this case, the core should be indexed in a first direction when winding the coil of one of the coil sets, by one half of a revolution upon completion of winding the one coil set, and, then, in an opposite second direction when winding the coil of the other coil set. Thereby, the coil ends of the two coil sets that are required to be commonly connected may be arranged physically close to each other for each phase.

Even when the coils belonging to different sets of coils may be all wound in a same direction, it is also possible to wind all of the coils while indexing the core in a fixed rotational direction although the coil ends of the two coil sets that are required to be commonly connected are arranged diametrically opposite positions for each phase.

### BRIEF DESCRIPTION OF THE DRAWINGS

Now the present invention is described in the following with reference to the appended drawings, in which:
Figure 1 is a plan view showing a coil winding arrangement for an armature embodying the present invention;
Figure 2 is an illustrative view showing the coil wiring arrangement for the U phase;
Figure 3 is a view similar to Figure 1 showing a second embodiment of the present invention.;
Figure 4 is a view similar to Figure 2 showing the second embodiment of the present invention;
Figure 5 is a view similar to Figure 3 showing a third embodiment of the present invention;
Figure 6 is an illustrative view showing an exemplary coil winding machine;
Figure 7 is a diagram showing a parallel connection of coil sets;
Figure 8 is an enlarged fragmentary view of an example in which two coil groups are wound around a core tooth one over the other; and
Figure 9 is an enlarged fragmentary view of an example in which two coil groups are wound around a core tooth one next to the other.

### DETAILED DESCRIPTION OF THE PREFERRED EMBODIMENTS

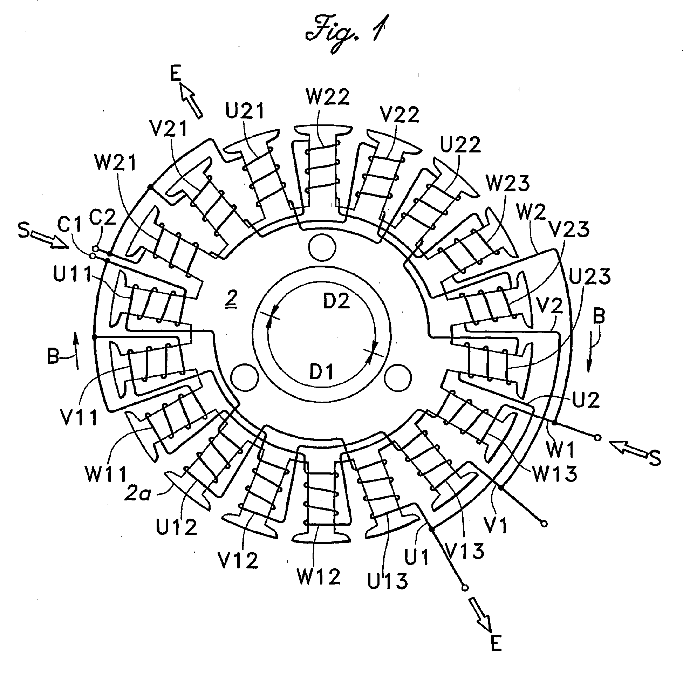

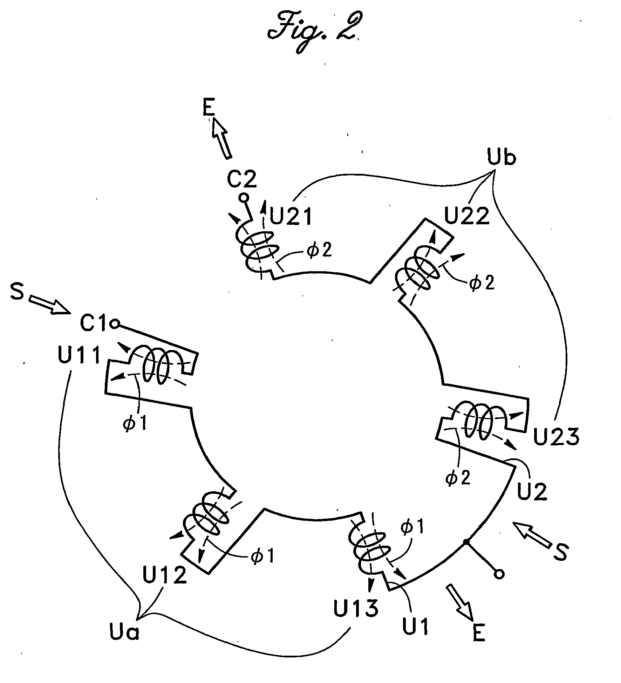

Figure 1 is a front view showing the coil winding arrangement for an armature 1 embodying the present invention. Figure 2 is a simplified diagram of the coil winding arrangement. The armature 1 may be used as a stator of an ACG starter for a vehicle engine, and is provided with an annular core 2 which is fixedly attached to an end wall of an engine by threaded bolts in a coaxial relationship with the crankshaft of the engine not shown in the drawing. A cylindrical rotor not shown in the drawing is typically disposed rotatably around the core 2 in a coaxial relationship.

The core 2 is provided with 18 radially extending teeth 2a at a regular interval along the circumference. In this armature 1, two sets of three-phase coils are wound around the teeth 2a in a parallel relationship, and Figure 7 shows how these coils are connected. How the coils are wound is described in the following. The winding machine in this case consists of a flyer type winding machine such as the one illustrated in Figure 6.

The core 2 is divided into two regions each extending one half of the entire circumference and including nine core teeth 2a. Coil wire L is wound around the core teeth 2a corresponding to the U phase, in a similar manner as shown in Figure 6, for one of the regions, and the start point S corresponds to the central node C1 of the star-connection. The coils U11, U12 and U13 are wound one after the other for every third core tooth 2a, and the end of the coil U13 is led out of the core 2 as an input/output lead line U1.

When a single flyer winding machine is used, the same coil wire L is then continued to be used to wind the coil U23 around the third core tooth 2a from the last core tooth. The end point E of the first set of coils U11, U12 and U13 which is also the start point S of the second set coils U21, U22 and U23 is drawn along the axial direction of the core and secured by a suitable jig so as not to interfere with the coil winding process for the second set of coils. As the winding process moves on from the first region D1 to the second region D2, the rotational direction of the flyer 12 is reversed. The end point E of the second set of coils U21, U22 and U23 corresponds to the central node C2 which is eventually commonly connected to the central node C1. The elimination of the need to cut the coil wire before winding the coils for the second region contributes to the improvement of the production efficiency.

When a double flyer winding machine is used, the two sets of coils can be wound simultaneously. The two flyers start the winding process from the starting points S of the first and second coil sets belonging to the first and second regions D1 and D2, respectively, by using separate coil wires. The two flyers rotate in opposite directions during the entire coil winding process, and the start points S, as well as the end points E, of the two sets of coils are required to be connected each other.

In either case, the first set of coils Ua consisting of the coils U11 to U13, and the second set of coils Ub consisting the coils U21 to U23 are formed as shown in Figures 1 and 2. The coils for the V and W phases are thereafter wound in a similar fashion before the armature is finally completed. Normally, separate indexing processes are required for the coil winding processes for the V and W phases. Because the coil winding directions are different between the first and second regions D1 and D2, the start point S (C1) of the first set of coils and the end point E (C2) of the second set of coils which are located adjacent to each other can be simply commonly connected, and the end point E (U1) of the first set of coils and the start point S (U2) of the second set of coils which are also located adjacent to each other can be simply commonly connected while conducting electric current in each coil in proper direction. Thus, the magnetic flux in the core teeth 2a is directed in the same direction as indicated by arrows φ₁ and φ₂ in Figure 2.

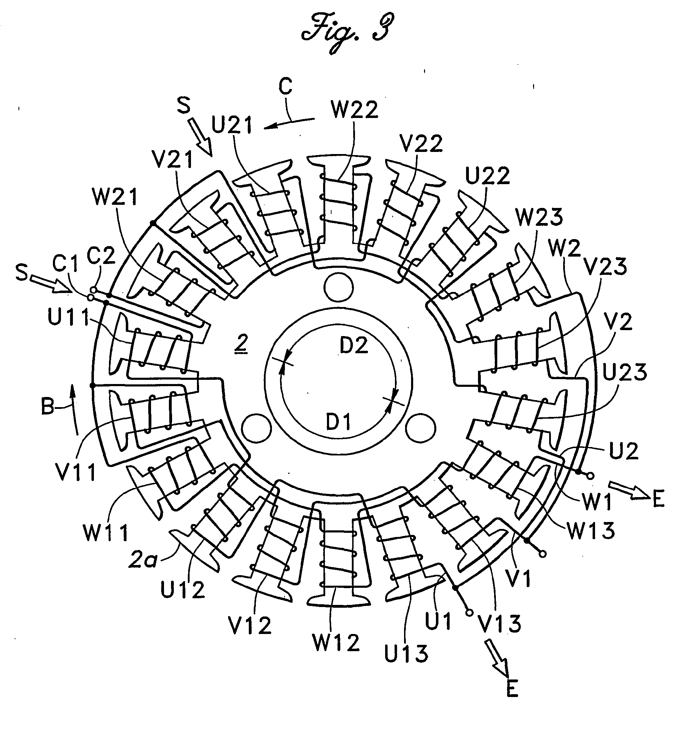

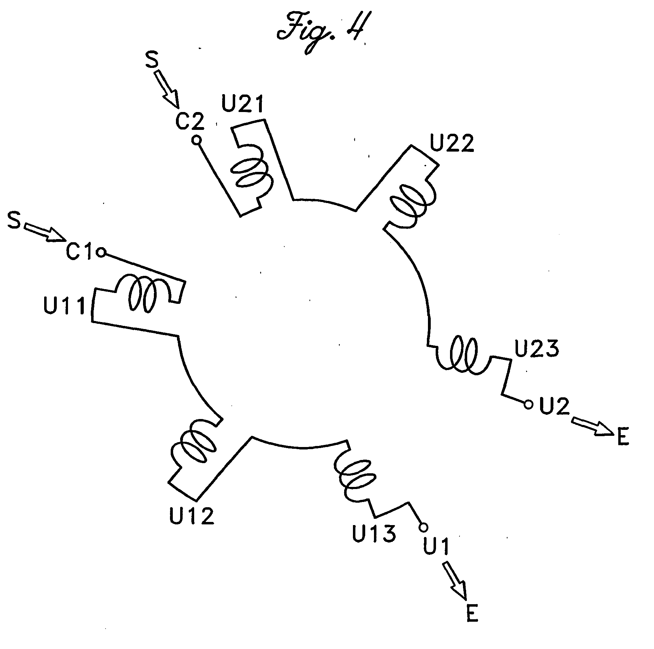

A second embodiment of the present invention is described in the following with reference to Figures 3 and 4. In the second embodiment, the core 2 is again divided into two regions each extending one half of the entire circumference and containing nine core teeth 2a as shown in Figure 3. The start points S of the coils U11, V11 and W11 are commonly designated as a central node C1, and each of the coil sets is wound from the central node C1.

When the coils for the first region have been fully wound for the U phase, for instance, and the coils for the second regions for the U phase are about to be wound, the coil wire L is cut, and the core 2 is indexed from the position at which the coil U13 was wound by one half of a full revolution. The second set of coil starting from the coil U21 is then wound by using the flyer 12 rotating in the same direction while indexing the core in the opposite direction indicated by arrow C in Figure 3.

Therefore, according to this embodiment, only a single flyer can be used, and the rotational direction of the flyer is kept fixed during the entire coil winding process. However, the core 2 is required to be indexed by more than one revolution during the process of winding the coils of each phase. Owing to the indexing of the core 2 before starting to wind the second set of coils, the start point S (C1) of the first set of coils and the start point S (C2) of the second set of coils which are located adjacent to each other can be simply commonly connected, and the end point E (U1) of the first set of coils the end point E (U2) of the second set of coils which are also located adjacent to each other can be simply commonly connected while conducting electric current in each coil in proper direction. Thus, the magnetic flux in the core teeth 2a is directed in the same direction

Figure 5 shows a third embodiment of the present invention, in which the coils can be wound without reversing the indexing direction of the core and without requiring the rotational direction of the flyer to be changed. The elimination of the need for reversing the indexing direction allows a double flyer winding machine to be used. In the latter case, the two flyers may rotate in the same direction, and this simplifies the structure of the flyer winding machine.

According to the third embodiment, the coil winding process for the first region D1 is carried out while indexing the core 2 in the direction indicated by arrow B, and the coil winding process for the second region D2 is continued while continuing the indexing of the core in the same direction, (indicated by arrow B). By doing so, the coil winding process can be carried out without reversing the indexing direction, and this contributes to the improvement of production efficiency. However, to connect the two sets of coils in parallel to each other so as to ensure the proper direction of magnetic flux at each core tooth, the coils ends located diagonally opposite positions are required to be commonly connected.

The illustrated embodiments deal with stators, but may also deal with rotors where coil wires are wound in parallel. A flyer winding machine was used in the foregoing embodiments, but winding machines of other types can also be used. Two coil sets were provided for each in the foregoing embodiments, but the present invention is not limited to using two sets of coils but may also use more than two sets of coils.

Although the present invention has been described in terms of preferred embodiments thereof, it is obvious to a person skilled in the art that various alterations and modifications are possible without departing from the scope of the present invention which is set forth in the appended claims.

## Claims

1. A coil winding arrangement for armatures formed by winding coil wire (L) around a plurality of core teeth (2a) provided in a core (2) of an armature (1) for a multi-phase electric motor or generator, comprising:
at least two sets of coils (Ua, Ub, Va, Vb, Wa, Wb) that are wound around different core teeth (2a) for each phase (U, V, W), said at least two sets of coil (Ua, Ub, Va, Vb, Wa, Wb) being connected in parallel to each other,
wherein each set of coils (Ua, Ub, Va, Vb, Wa, Wb) for each phase (U, V, W) includes a plurality of coils (U11, U12, U13; U21, U22, U23) wound around different core teeth (2a), said core teeth (2a) corresponding to different sets of coils (Ua, Ub, Va, Vb, Wa, Wb) being grouped in circumferentially separated regions (D1, D2) of said armature (1),
**characterized in that** said coils (U11, U12, U13; U21, U22, U23) belonging to a same set of coils (Ua, Ub), are wound in a same direction.

2. A coil winding arrangement according to claim 1, **characterized in that** said coils sets (Ua, Ub, Va, Vb, Wa, Wb) for each phase (U, V, W) are wound while indexing said core (2) in a fixed rotational direction (B).

3. A coil winding arrangement according to claim 2, **characterized in that** the coil (U11, U12, U13) belonging to one (Ua) of said coil sets is wound in a certain direction, and the coil (U21, U22, U23) belonging to another coil set (Ub) is wound in an opposite direction.

4. A coil winding arrangement according to claim 1, **characterized in that** said coils (U11, U12, U13, U21, U22, U23) belonging to different sets of coils (Ua Ub) are all wound in a same direction.

5. A coil winding arrangement according to claim 1, **characterized in that** said armature (1) is provided with a three-phase star-connected coils.

6. A coil winding arrangement according to claim 1, **characterized in that** the number of said coil sets (Ua, Ub) is two, and said core teeth (2a) corresponding to different sets of coils (Ua, Ub) are grouped in two semi-circumferential regions (D1, D2) of said armature (1), the coil (U11, U12, U13) belonging to one of said coil sets (Ua) being wound in a certain direction while the coil (U21, U22, U23) belonging to the other coil set (Ub) is wound in an opposite direction.

7. A coil winding arrangement according to claim 6, **characterized in that** said coil sets (Ua, Ub, Vb, Va, Wa, Wb) for each phase (U, V, W) are wound while indexing said core (2) in a fixed rotational direction (B).

8. A coil winding arrangement according to claim 7, **characterized in that** said coil sets (Ua, Ub, Va, Vb, Wa, Wb) are both wound by a same flyer (12).

9. A coil winding arrangement according to claim 7, **characterized in that** said coil sets (Ua, Ub, Va, Vb, Wa, Wb) are simultaneously wound by two different flyers (12).

10. A coil winding arrangement according to claim 1, **characterized in that** the number of said coil sets (Ua, Ub) is two, and said core teeth (2a) corresponding to different sets of coils (Ua, Ub) are grouped in two semi-circumferential regions (D1, D2) of said armature (1), said coils belonging to different sets of coils (Ua, Ub) are all wound in a same direction.

11. A coil winding arrangement according to claim 10, **characterized in that** said core (2) is indexed in a first direction when winding the coil of one (Ua) of said coils sets (Ua, Ub), by one half of a revolution upon completion of winding the one coil set (Ua), and, then, in an opposite second direction when winding the coil of the other coil set (Ub).

12. A coil winding arrangement according to claim 10, **characterized in that** said coil sets (Ua, Ub, Va, Vb, Wa, Wb) for each phase (U, V, W) are wound while indexing said core (2) in a fixed rotational direction (B).

## Patentansprüche

1. Spulenwickelanordnung für Anker, die durch Wickeln von Spulendraht (L) um mehrere Zähne (2a) gebildet wird, welche in einem Kern (2) eines Ankers (1) für einen mehrphasigen Elektromotor oder -generator bereitgestellt sind, umfassend:
mindestens zwei Sätze von Spulen (Ua, Ub, Va, Vb, Wa, Wb), die um verschiedene Zähne (2a) für jede Phase (U, V, W) gewickelt sind, wobei mindestens zwei Sätze von Spulen (Ua, Ub, Va, Vb, Wa, Wb) parallel miteinander verbunden sind,
wobei jeder Satz von Spulen (Ua, Ub, Va, Vb, Wa, Wb) für jede Phase (U, V, W) mehrere Spulen (U11, U12, U13; U21, U22, U23) umfasst, die um verschiedene Zähne (2a) gewickelt sind, wobei die Zähne (2a) den verschiedenen Sätzen von Spulen (Ua, Ub, Va, Vb, Wa, Wb) entsprechen, die am Umfang in betrennten Bereichen (D1, D2) des Ankers (1) gruppiert sind,
**dadurch gekennzeichnet, dass** die Spulen (U11, U12, U13; U21, U22, U23), die zum selben Satz von Spulen (Ua, Ub) gehören, in derselben Richtung gewickelt sind.

2. Spulenwickelanordnung nach Anspruch 1, **dadurch gekennzeichnet, dass** die Spulensätze (Ua, Ub, Va, Vb, Wa, Wb) für jede Phase (U, V, W) gewickelt sind, wobei der Kern (2) in einer festen Rotationsrichtung indexiert ist.

3. Spulenwickelanordnung nach Anspruch 2, **dadurch gekennzeichnet, dass** die Spule (U11, U12, U13), die zu einem (Ua) der Spulensätze gehört, in einer bestimmten Richtung gewickelt ist, und die Spule (U21, U22, U23), die zu einem anderen Spulensatz gehört, in einer entgegen gesetzten Richtung gewickelt ist.

4. Spulenwickelanordnung nach Anspruch 1, **dadurch gekennzeichnet, dass** die Spulen (U11, U12, U13, U21, U22, U23), die zu verschiedenen Spulensätzen (Ua, Ub) gehören, alle in derselben Richtung gewickelt sind.

5. Spulenwickelanordnung nach Anspruch 1, **dadurch gekennzeichnet, dass** der Anker (1) mit dreiphasigen sterngeschalteten Spulen versehen ist.

6. Spulenwickelanordnung nach Anspruch 1, **dadurch gekennzeichnet, dass** die Zahl der Spulensätze (Ua, Ub) zwei beträgt und die zähne (2a), die verschiedenen Sätzen von Spulen (Ua, Ub) entsprechen, in zwei Bereichen (D1, D2) am halben Umfang des Ankers (1) gruppiert sind, wobei die Spule (U11, U12, U13) zu einem der Spulensätze (Ua) gehört, der in eine bestimmte Richtung gewickelt ist, während die Spule (U21, U22, U23), die zum anderen Spulensatz (Ub) gehört, in einer entgegen gesetzten Richtung gewickelt ist.

7. Spulenwickelanordnung nach Anspruch 6, **dadurch gekennzeichnet, dass** die Spulensätze (Ua, Ub, Va, Vb, Wa, Wb) für jede Phase (U, V, W) gewickelt sind, wobei der Kern (2) in einer festen Rotationsrichtung (B) indexiert ist.

8. Spulenwickelanordnung nach Anspruch 7, **dadurch gekennzeichnet, dass** die Spulensätze (Ua, Ub, Va, Vb, Wa, Wb) beide durch denselben Bügel (Flyer) (12) gewickelt sind.

9. Spulenwickelanordnung nach Anspruch 7, **dadurch gekennzeichnet, dass** die Spulensätze (Ua, Ub, Va, Vb, Wa, Wb) gleichzeitig durch zwei verschiedene Bügel (Flyer) (12) gewickelt sind.

10. Spulenwickelanordnung nach Anspruch 1, **dadurch gekennzeichnet, dass** die Zahl der Spulensätze (Ua, Ub) zwei beträgt und die Zähne (2a), die verschiedenen Sätzen von Spulen (Ua, Ub) entsprechen, in zwei Bereichen (D1, D2) am halben Umfang des Ankers (1) gruppiert sind, wobei die Spulen, die zu verschiedenen Spulensätze (Ua, Ub) gehören, alle in derselben Richtung gewickelt sind.

11. Spulenwickelanordnung nach Anspruch 10, **dadurch gekennzeichnet, dass** der Kern (2) beim Wickeln der Spule eines (Ua) der Spulensätze (Ua, Ub) um eine halbe Umdrehung beim Abschluss des Wickelns des einen Spulensatzes (Ua) in einer ersten Richtung indexiert ist und dann in einer entgegen gesetzten zweiten Richtung, wenn die Spule des anderen Spulensatzes (Ub) gewickelt ist.

12. Spulenwickelanordnung nach Anspruch 10, **dadurch gekennzeichnet, dass** die Spulensätze (Ua, Ub, Va, Vb, Wa, Wb) für jede Phase (U, V, W) gewickelt sind, wobei der Kern (2) in einer festen Rotationsrichtung (B) indexiert ist.

## Revendications

1. Agencement d'enroulement de bobine pour des induits formés en enroulant un fil de bobine (L) autour d'une pluralité de dents de noyau (2a) fournies dans un noyau (2) d'un induit (1) pour un moteur ou générateur électrique multiphasé, comprenant :
au moins deux ensembles de bobines (Ua, Ub, Va, Vb, Wa, Wb) qui sont enroulés autour de différentes dents de noyau (2a) pour chaque phase (U, V, W), lesdits au moins deux ensembles de bobines (Ua, Ub, Va, Vb, Wa, Wb) étant connectés en parallèle entre eux,
dans lequel chaque ensemble de bobines (Ua, Ub, Va, Vb, Wa, Wb) pour chaque phase (U, V, W) comprend une pluralité de bobines (U11, U12, U13 ; U21, U22, U23) enroulées autour de différentes dents de noyau (2a), lesdites dents de noyau (2a) correspondant à différents ensembles de bobines (Ua, Ub, Va, Vb, Wa, Wb) étant regroupés dans des régions séparées circonférentiellement (D1, D2) dudit induit (1),
**caractérisé en ce que** lesdites bobines (U11, U12, U13 ; U21, U22, U23) appartenant à un même ensemble de bobines (Ua, Ub) sont enroulées dans une même direction.

2. Agencement d'enroulement de bobine selon la revendication 1, **caractérisé en ce que** lesdits ensembles de bobines (Ua, Ub, Va, Vb, Wa, Wb) pour chaque phase (U, V, W) sont enroulés tout en indexant ledit noyau (2) dans une direction de rotation fixe (B).

3. Agencement d'enroulement de bobine selon la revendication 2, **caractérisé en ce que** la bobine (U11, U12, U13) appartenant à l'un (Ua) desdits ensembles de bobines est enroulée dans une certaine direction, et la bobine (U21, U22, U23) appartenant à un autre ensemble de bobines (Ub) est enroulée dans une direction opposée.

4. Agencement d'enroulement de bobine selon la revendication 1, **caractérisé en ce que** lesdites bobines (U11, U12, U13, U21, U22, U23) appartenant à différents ensembles de bobines (Ua, Ub) sont toutes enroulées dans une même direction.

5. Agencement d'enroulement de bobine selon la revendication 1, **caractérisé en ce que** ledit induit (1) est muni de bobines triphasées connectées en étoile.

6. Agencement d'enroulement de bobine selon la revendication 1, **caractérisé en ce que** le nombre desdits ensembles de bobines (Ua, Ub) est égal à deux, et lesdites dents de noyau (2a) correspondant à différents ensembles de bobines (Ua, Ub) sont groupées en deux régions semi-circonfërentielles (D1, D2) dudit induit (1), la bobine (U11, U12, U13) appartenant à l'un desdits ensembles de bobines (Ua) étant enroulée dans une certaine direction alors que la bobine (U21, U22, U23) appartenant à l'autre ensemble de bobines (Ub) est enroulée dans une direction opposée.

7. Agencement d'enroulement de bobine selon la revendication 6, **caractérisé en ce que** lesdits ensembles de bobines (Ua, Ub, Va, Vb, Wa, Wb) pour chaque phase (U, V, W) sont enroulés tout en indexant ledit noyau (2) dans une direction rotationnelle fixe (B).

8. Agencement d'enroulement de bobine selon la revendication 7, **caractérisé en ce que** lesdits ensembles de bobines (Ua, Ub, Va, Vb, Wa, Wb) sont tous enroulés par un même épinglier (12).

9. Agencement d'enroulement de bobine selon la revendication 7, **caractérisé en ce que** lesdits ensembles de bobines (Ua, Ub, Va, Vb, Wa, Wb) sont simultanément enroulés par deux épingliers différents (12).

10. Agencement d'enroulement de bobine selon la revendication 1, **caractérisé en ce que** le nombre desdits ensembles de bobines (Ua, Ub) est égal à deux, et lesdites dents de noyau (2a) correspondant à différents ensembles de bobines (Ua, Ub) sont groupées en deux régions semi-circonférentielles (D1, D2) dudit induit (1), lesdites bobines appartenant à différents ensembles de bobines (Ua, Ub) sont toutes enroulées dans une même direction.

11. Agencement d'enroulement de bobine selon la revendication 10, **caractérisé en ce que** ledit noyau (2) est indexé dans une première direction lors de l'enroulement de la bobine de l'un (Ua) desdits ensembles de bobines (Ua, Ub), d'un demi-tour à l'achèvement de l'enroulement de l'ensemble de bobines (Ua), puis dans une deuxième direction opposée lors de l'enroulement de la bobine de l'autre ensemble de bobines (Ub).

12. Agencement d'enroulement de bobine selon la revendication 10, **caractérisé en ce que** lesdits ensembles de bobines (Ua, Ub, Va, Vb, Wa, Wb) pour chaque phase (U, V, W) sont enroulés tout en indexant ledit noyau (2) dans une direction rotationnelle fixe (B).
